# EUROPEAN PATENT APPLICATION

(11) **EP 4 213 269 A1**
(43) Date of publication of application: **19.07.2023**
(21) Application number: 21886708.3
(22) Date of filing: 22.10.2021
(51) Int. Cl.: H01M 10/0585, H01M 10/0587, H01M 4/62, H01M 4/66, H01M 4/131, H01M 4/133, H01M 10/0525, H01M 50/256, H01M 50/209

(54) **BATTERY AND ELECTRONIC DEVICE COMPRISING BATTERY**

(30) Priority: 02.11.2020 KR 20200144285
(71) Applicant: Samsung Electronics Co., Ltd., Suwon-si, Gyeonggi-do 16677 (KR)
(72) Inventor: KIM, Sunjin, Suwon-si Gyeonggi-do 16677 (KR); JANG, Kiyoun, Suwon-si Gyeonggi-do 16677 (KR); JEON, Yongsub, Suwon-si Gyeonggi-do 16677 (KR); CHO, Chihyun, Suwon-si Gyeonggi-do 16677 (KR); CHOI, Jaeman, Suwon-si Gyeonggi-do 16677 (KR); HEO, Changryong, Suwon-si Gyeonggi-do 16677 (KR)
(74) Representative: Gulde & Partner
(86) International application number: PCT/KR2021/014915
(87) International publication number: WO 2022/092714

(57) **Abstract**

An electronic device according to an embodiment of the present disclosure comprises a display and a battery for supplying power to the display, wherein the battery may comprise: a substrate having a first surface and a second surface opposite to the first surface; a first mixture arranged on the first surface and the second surface of the substrate, the first mixture including an electrode active material, a conductive material, and a first binder; and a second mixture arranged on the first surface and the second surface of the substrate, the second mixture including the electrode active material, the conductive material, and a second binder that is softer than the first binder. The first mixture and the second mixture may be alternately arranged.

## Description

### [Technical Field]

One or more embodiments of the instant disclosure generally relate to a battery and an electronic device including the battery.

### [Background Art]

As information, communication, and semiconductor technologies have advanced, the spread and use of various electronic devices implementing these technologies have correspondingly accelerated. In particular, recently mobile communication devices have been developed. These electronic devices may also output stored information as sound or images. As these electronic devices are highly integrated, and high-speed, high-volume wireless communication becomes commonplace, these electronic devices, sometimes referred to as mobile communication terminals, have been developed to perform various functions. For example, one such electronic device may be able to perform communication function as well as entertainment function, such as playing video games, multimedia function, such as replaying music/videos, communication and security function for mobile banking, and scheduling and e-wallet functions. Such mobile electronic devices must be compact enough for users to carry in a convenient way.

### [Detailed Description of the Invention]

### [Technical Problem]

Mobile electronic devices each may include a lithium ion battery that is used as the power source, and the battery includes a combination of unit cells each including a cathode, an anode, and a separator. The cathode and the anode may include an electrode substrate and a mixture coated on the electrode substrate and containing an active material. Lithium-ion batteries convert chemical energy into electrical energy using redox reactions between the cathodes and anodes. Thus, the proportion of active material in the lithium-ion battery may be proportional to the battery's capacity.

However, since the mixture has a certain brittleness, the battery cannot be significantly bent. Batteries in which the mixture has been removed from a portion of the substrate are bendable but exhibit low capacity relative to their volume.

### [Technical Solution]

According to an embodiment of the disclosure, an electronic device comprises a display and a battery for supplying power to the display. The battery includes a substrate having a first surface and a second surface opposite to the first surface, a first mixture disposed on the first surface and the second surface of the substrate, the first mixture including an electrode active material, a conductive material, and a first binder, and a second mixture disposed on the first surface and the second surface of the substrate, the second mixture including the electrode active material, the conductive material, and a second binder more flexible than the first binder. The first mixture and the second mixture may be alternatingly arranged.

According to an embodiment of the disclosure, a battery comprises a substrate including a first surface and a second surface opposite to the first surface, a first mixture disposed on the first surface and the second surface of the substrate, the first mixture including an electrode active material, a conductive material, and a first binder, and a second mixture disposed on the first surface and the second surface of the substrate, the second mixture including the electrode active material, the conductive material, and a second binder more flexible than the first binder. The first mixture and the second mixture may be alternatingly arranged.

### [Advantageous Effects]

According to certain embodiments of the disclosure, it is possible to provide a battery that is bendable while mitigating reduction in battery capacity.

According to certain embodiments of the disclosure, a provided battery uses a first mixture including a first binder and a second mixture including a second binder having greater flexibility than the first binder and is thus bendable while mitigating reduction in battery capacity.

According to certain embodiments of the disclosure, a provided battery may remain in a stable state even while bent.

The disclosure is not limited to the foregoing embodiments, but various modifications or changes may rather be made thereto without departing from the spirit and scope of the disclosure.

### [Brief Description of Drawings]

FIG. 1 is a block diagram illustrating an electronic device in a network environment according to various embodiments of the disclosure;
FIG. 2 is a front perspective view illustrating an electronic device according to an embodiment of the disclosure;
FIG. 3 is a rear perspective view illustrating the electronic device of FIG. 2;
FIG. 4 is a perspective view illustrating a battery according to an embodiment of the disclosure;
FIG. 5 is a cross-sectional view illustrating a battery according an embodiment of the disclosure;
FIG. 6 is a view schematically illustrating a battery according to an embodiment of the disclosure;
FIG. 7 illustrates the chemical structure of a second binder according to an embodiment of the disclosure;
FIGs. 8A and 8B are perspective views illustrating a folded battery according to various embodiments of the disclosure;
FIG. 9 is a perspective view illustrating a battery in a jelly roll structure according to an embodiment of the disclosure;
FIG. 10 is a cross-sectional view taken along line A-A' of FIG. 9;
FIG. 11 is a perspective view illustrating a battery in a jelly roll structure according to another embodiment of the disclosure;
FIG. 12 is a cross-sectional view taken along line B-B' of FIG. 11;
FIG. 13 is a view schematically illustrating a bent battery according to an embodiment of the disclosure; and
FIGs. 14A and 14B are views schematically illustrating a first mixture and a second mixture disposed on a substrate according to an embodiment of the disclosure.

### [Mode for Carrying out the Invention]

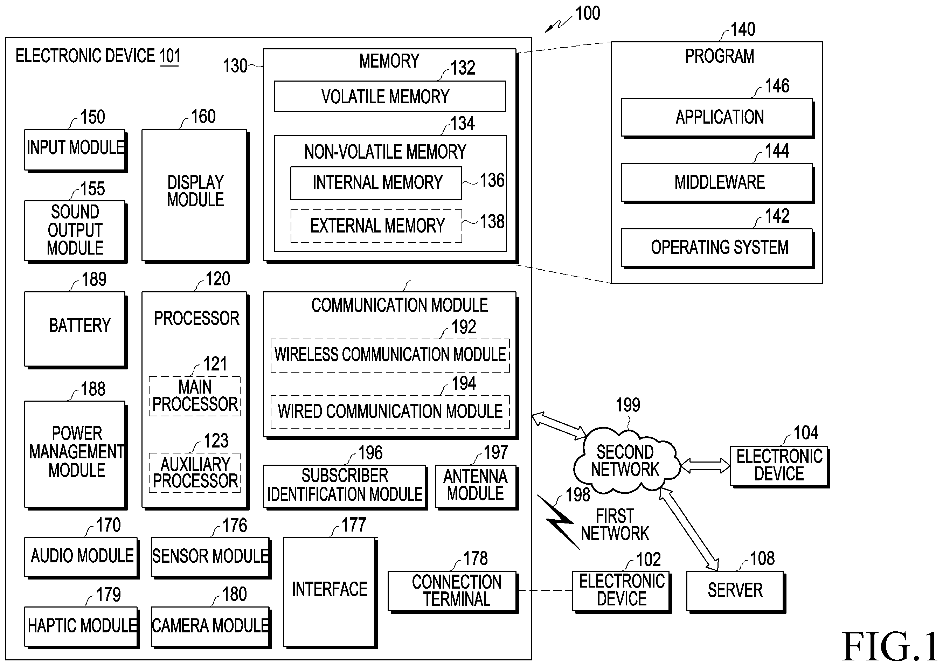

FIG. 1 is a block diagram illustrating an electronic device in a network environment according to various embodiments of the disclosure;
Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

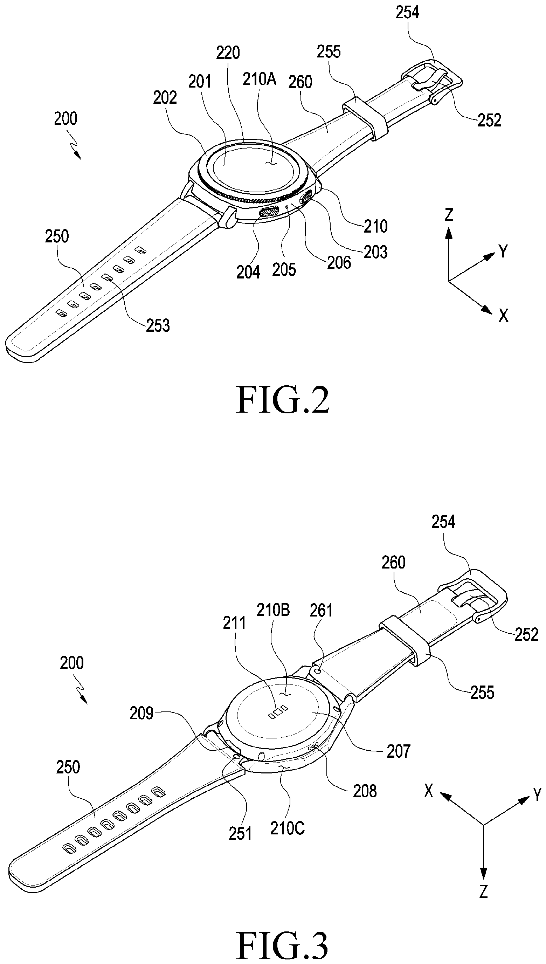

FIG. 2 is a front perspective view illustrating an electronic device according to an embodiment of the disclosure. FIG. 3 is a rear perspective view illustrating the electronic device of FIG. 2. The configuration of the electronic device 200 of FIGs. 2 and 3 may be identical in whole or part to the configuration of the electronic device 101 of FIG. 1.

Referring to FIGs. 2 and 3, according to an embodiment, an electronic device 200 may include a housing 210 including a first surface (or front surface) 210A, a second surface (or rear surface) 210B, a side surface 210C surrounding the space between the first surface 210A and the second surface 210B, and coupling members 250 and 260 connected to at least part of the housing 210 and configured to allow the electronic device 200 to be removably worn on a portion of the user's body (e.g., the user's wrist or ankle). According to another embodiment (not shown), the housing may refer to a structure forming part of the first surface 210A, the second surface 210B, and the side surface 210C of FIG. 2. According to an embodiment, at least part of the first surface 210A may have a substantially transparent front plate 201 (e.g., a glass plate or polymer plate including various coat layers). The second surface 210B may be formed by a rear plate 207 that is substantially opaque. The rear plate 207 may be made of, e.g., laminated or colored glass, ceramic, polymer, metal (e.g., aluminum, stainless steel (STS), or magnesium), or a combination of at least two thereof. The side surface 210C may be formed by a side bezel structure (or a "side member") 206 that couples to the front plate 201 and the rear plate 207 and includes metal and/or polymer. According to an embodiment, the rear plate 207 and the side bezel plate 206 may be integrally formed together and be made of the same material (e.g., metal such as aluminum). The coupling members 250 and 260 may be made of various materials in various shapes. The coupling members may have a uni-body structure or may include multiple unit links which are flexible and are made of fabric, leather, rubber, urethane, metal, ceramic, or a combination of at least two thereof.

According to an embodiment, the electronic device 200 may include at least one or more of a display 220, audio modules 205 and 208, a sensor module 211, key input devices 202, 203, and 204, and a connector receptacle 209. According to an embodiment, the electronic device 200 may exclude at least one (e.g., the key input devices 202, 203, and 204, connector receptacle 209, or sensor module 211) of the components or may add other components.

The display 220 may be exposed through a significant portion of the front plate 201. The display 220 may have a shape corresponding to the shape of the front plate 201, e.g., circle, ellipse, polygon, etc. The display 220 may be coupled with, or disposed adjacent to, a touch detection circuit, a pressure sensor capable of measuring the strength (pressure) of touches, and/or fingerprint sensor.

The audio modules 205 and 208 may include a microphone hole 205 and a speaker hole 208. The microphone hole 205 may be disposed to correspond to an internal microphone in order to allow the microphone to obtain external sounds. According to an embodiment, there may be a plurality of microphones to be able to detect the direction of a sound. The speaker holes 208 may be used for an internal speaker or a receiver for phone talks. According to an embodiment, the speaker holes 208 and the microphone hole 205 may be implemented as a single hole, or the internal speakers may not have corresponding speaker holes 208, such as in the case for piezo speakers.

The sensor module 211 may produce electrical signals or data value corresponding to the internal operation state or external environment state of the electronic device 200. The sensor module 211 may include, e.g., a biometric sensor module 211 (e.g., a heartrate monitor (HRM) sensor) disposed on the second surface 210B of the housing 210. The electronic device 200 may further include sensor modules not shown, e.g., at least one of gesture sensor, gyro sensor, atmospheric pressure sensor, magnetic sensor, acceleration sensor, grip sensor, color sensor, infrared (IR) sensor, biometric sensor, temperature sensor, humidity sensor, or illuminance sensor.

The key input devices 202, 203, and 204 may include a wheel key 202 disposed on the first surface 210A of the housing 210 to be rotatable in at least one direction and/or key buttons 202 and 203 disposed on the side surface 210C of the housing 210. The wheel key may have a shape corresponding to the shape of the front plate 201. According to an embodiment, the electronic device 200 may exclude all or some of the above-mentioned key input devices 202, 203, and 204 and the excluded key input devices 202, 203, and 204 may be implemented in other forms, e.g., as soft keys on the display 220. The connector receptacle 209 may receive a connector (e.g., a universal serial bus (USB) connector) for transmitting and receiving power and/or data to/from an external electronic device. Another connector receptacle (not shown) may be included for receiving a connector for transmitting and receiving audio signals to/from the external electronic device. The electronic device 200 may further include a connector cover (not shown) to cover at least part of, e.g., the connector receptacle 209 and preventing unwanted materials such as debris from entering the connector receptacle.

The coupling members 250 and 260 may detachably be fastened to at least portions of the housing 210 via locking members 251 and 261. The coupling members 250 and 260 may include one or more of the fastening member 252, fastening member coupling holes 253, a band guide member 254, and band fastening ring 255.

The fastening member 252 may be configured to allow the housing 210 and the coupling members 250 and 260 to be fastened to a portion of the user's body (e.g., wrist or ankle). The fastening member coupling holes 253 may receive a protruding member of the fastening member 252 to fasten the housing 210 and the coupling members 250 and 260 to the portion of the user's body portion. The band guide member 254 may be configured to restrict movement of the fastening member 252 to a certain range when the fastening member 252 fits into one of the fastening member coupling holes 253, thereby allowing the coupling members 250 and 260 to be tightly fastened onto the portion of the user's body. The band fastening ring 255 may limit the range of movement of the coupling members 250 and 260, when the fastening member 252 is fitted into one of the fastening member coupling holes 253.

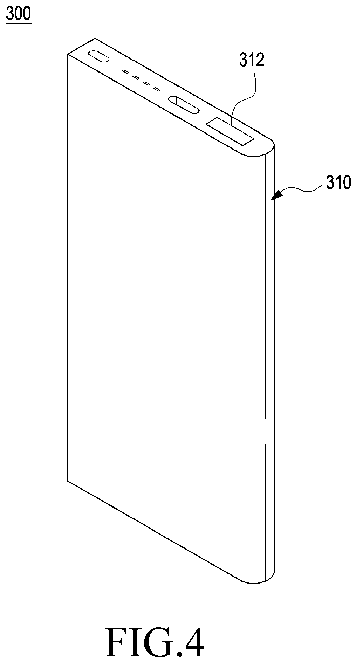

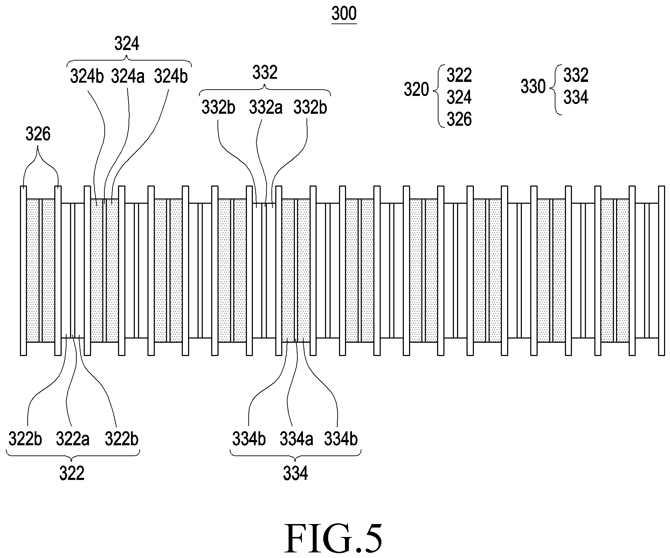

FIG. 4 is a front perspective view illustrating a battery according to an embodiment of the disclosure. FIG. 5 is a cross-sectional view of the battery of FIG. 4.

Referring to FIGs. 4 and 5, the battery 300 may include a case 310 and electrode assemblies 320 and 330 disposed in the case 310. The configuration of the battery 300 of FIGs. 4 and 5 may be identical in whole or part to the configuration of the battery 189 of FIG. 1.

According to various embodiments, the battery 300 may supply power to at least one component of an electronic device (e.g., the electronic device 200 of FIG. 2). According to an embodiment, the battery 300 may be a rechargeable secondary battery. According to an embodiment, the battery 300 may be disposed in a wearable electronic device (e.g., the electronic device 200 of FIG. 2). For example, the battery 300 may be disposed in a coupling member (e.g., the coupling members 250 and 260 of FIG. 2). According to an embodiment, the battery 300 may be a jelly roll battery that may be disposed in an electronic device (e.g., a mobile phone).

According to various embodiments, the case 310 may form the exterior of the battery 300 and may provide the internal space for receiving the electrode assemblies 320 and 330. According to an embodiment, the case 310 may be a pouch or a can structure for encapsulating the electrode assembly 320. According to an embodiment, the case 310 is bendable. For example, the case 310 may be made of a flexible material. According to an embodiment, the case 310 may include at least one terminal 312 for electrically connecting to an external electronic device.

According tovarious embodiments , the electrode assemblies 320 and 330 may include at least one cathode 322 and 332, at least one anode 324 and 334, and at least one separator 326. For example, the electrode assemblies 320 and 330 may include at least one unit cell including a cathode 322, an anode 324, and a separator 326 disposed between the cathode 322 and the anode 324.

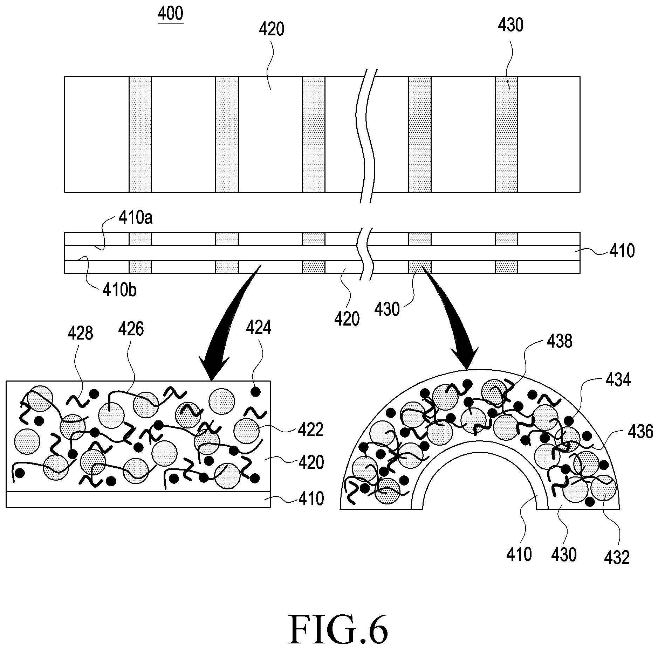

According tovarious embodiments , the cathodes 322 and 332 may include cathode substrates 322a and 332a and cathode mixtures 322b and 332b disposed on the cathode substrates 322a and 332a. According to an embodiment, the cathode substrates 322a and 332a may include aluminum (Al). According to an embodiment, the cathode mixtures 322b and 332b may include lithium (Li) oxide including a transition metal (e.g., at least one of cobalt (Co), manganese (Mn), or iron (Fe)). According to an embodiment, the cathode mixtures 322b and 332b may at least partially surround the cathode substrates 322a and 332a. For example, the cathode substrate 322a and 332a each may be disposed between a pair of cathode mixtures 322b and 332b. According to an embodiment, the cathode mixtures 322b and 332b may include 1-1th mixtures 322b forming at least part of first mixtures (e.g., the first mixtures 420 of FIG. 6) and 2-1th mixtures 332b forming at least part of second mixtures (e.g., the second mixtures 430 of FIG. 6).

According to various embodiments, the anode 324 may include an anode substrate 324a and anode mixtures 324b. According to an embodiment, the anode substrate 324a may include copper (Cu). According to an embodiment, the anode mixture 324b may include graphite and/or lithium (Li) titanium (Ti) oxide. According to an embodiment, the anode mixtures 324b and 334b may include 1-2th mixtures 324b forming at least part of first mixtures (e.g., the first mixtures 420 of FIG. 6) and 2-2th mixtures 334b forming at least part of second mixtures (e.g., the second mixtures 430 of FIG. 6).

According to various embodiments, the separator 326 may physically separate the cathode 322 and the anode 324. The separator 326 may be a non-conductive porous body with pores capable of transporting a designated material (e.g., lithium (Li) ions). According to an embodiment, the separator 326 may be a synthetic resin (e.g., polyethylene or polypropylene). According to an embodiment, two separators 326 may be provided. For example, the unit cell may include a first separator 326 disposed between a cathode 322 and an anode 324 and a second separator 326 spaced apart from the first separator 326 and disposed on the cathode 322 or the anode 324.

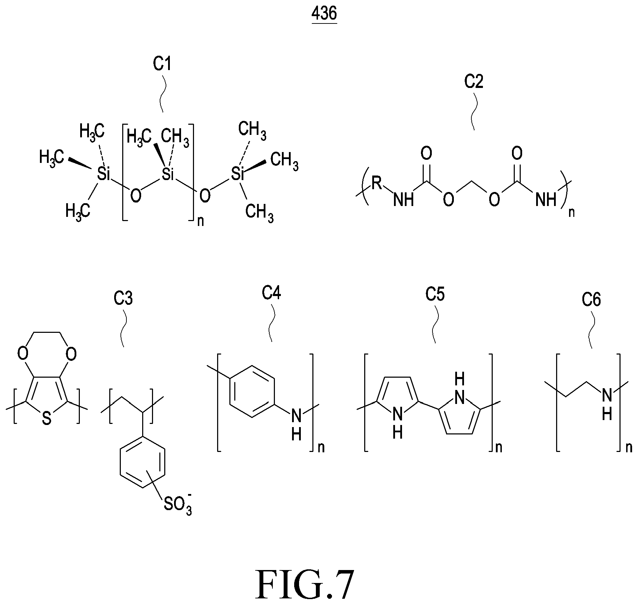

FIG. 6 is a view schematically illustrating a battery according to an embodiment of the disclosure. FIG. 7 illustrates the chemical structure of a second binder according to an embodiment of the disclosure.

Referring to FIG. 6, a battery 400 may include a substrate 410, a first mixture 420, and a second mixture 430. The configuration of the battery 400 of FIGs. 6 may be identical in whole or part to the configuration of the battery 300 of FIGs. 4 and 5. In FIG. 6, the battery 400 is illustrated as an electrode assembly or a battery cell, but the battery 400 may be a battery including a pouch or case (e.g., the case 310 of FIG. 4) and an electrolyte (not shown).

According to an embodiment, the substrate 410 may be formed to be in a flat plate shape. For example, the substrate 410 may include a first surface 410a (e.g., a front surface) and a second surface 410b (e.g., a rear surface) opposite to the first surface 410a. The substrate 410 may wholly or partially have the same configuration as the cathode substrate 322a and/or the anode substrate 324a of FIG. 5.

According to an embodiment, the first mixture 420 may include electrode active materials 422, conductive material 424, and a first binder 426. The configuration of the first mixture 420 may be identical in whole or part to the configuration of one of the cathode mixture (e.g., the 1-1th mixture 322b) and one of anode mixture (e.g., the 1-2th mixture 324b) of FIG. 5.

According to an embodiment, the electrode active materials 422 may be a cathode active material capable of providing lithium (Li) ions or an anode active material capable of storing lithium (Li) ions. For example, the electrode active materials 422 include lithium oxide including a transition metal (e.g., at least one of cobalt (Co), manganese (Mn), nickel (Ni), or iron (Fe)). As another example, the electrode active materials 422 may include graphite and/or lithium (Li) titanium (Ti) oxide. According to an embodiment, the electrode active materials 422 and 432 include a first electrode active material 422 forming at least a portion of the first mixture 420 and a second electrode active material 432 forming at least a portion of the second mixture 430. The second electrode active material 432 may have the same chemical composition as the first electrode active material 422.

According to an embodiment, the conductive material 424 may increase the conductivity of the electrode active material 422. According to an embodiment, the conductive material may include carbon. For example, the conductive material 424 may include at least one of carbon black, conducting graphite, or ethylene black. According to an embodiment, the conductive materials 424 and 434 include a first conductive material 424 forming at least a portion of the first mixture 420 and a second conductive material 434 forming at least a portion of the second mixture 430.

According to an embodiment, the first binder 426 may increase the bonding force between the substrate 410 and the components of the first mixture 420 (e.g., the electrode active material 422 and the conductive material 424). According to an embodiment, the first binder 426 may be a binder for a graphite-based active material. For example, the first binder 426 may include at least one of polyvinylidene fluoride (PVDF) or styrene butadiene rubber (SBR).

According to an embodiment, the first mixture 420 may include carbon nanotubes 428. The carbon nanotubes 428 may be used as the conductive material 424. According to an embodiment, the second mixture 430 may include an electrode active material 432, a conductive material 434, and a second binder 436. The configuration of the second mixture 430 may be identical in whole or part to the configuration of one of the cathode mixture (e.g., the 2-1th mixture 332b) and one of anode mixture (e.g., the 2-2th mixture 334b) of FIG. 5.

According to an embodiment, the second binder 436 may increase the bonding force between the substrate 410 and the components of the second mixture 430 (e.g., the electrode active material 432 and the conductive material 434).

According to an embodiment, the second binder 436 may be more flexible than the first binder 426. Referring to FIG. 7, the second binder 436 may include a bendable polymer. For example, the second binder 436 may include at least one of polydimethylsiloxane (PDMS) (c1) or polyurethane (PU) (c2). According to an embodiment, the second binder 436 may include a conductive polymer and an enhancer. For example, the second binder 436 may include at least one of poly(4,4-ethylenedioxythiophene):poly(styrenesulfonate), PEDOT:PSS)(c3), polyaniline (PANI)(c4), polypyrrole (Ppy)(c5), or polyethylenimine (PEI)(c6) which is a conductive polymer. The enhancer may be a fluorine-based surfactant. According to an embodiment, the second binder of the second mixture 430 may include a self-healing polymer. For example, at least a portion of the second binder 436 may be a self-healing polymer. The self-healing polymer may be a material capable of repairing at least a portion of damage to the battery 400. For example, the self-healing polymer may include microcapsules containing a synthetic resin (e.g., dicyclopentadiene).

According to an embodiment, the second mixture 430 may include at least one of carbon nanotubes 438 or graphene (not shown). According to an embodiment, the carbon nanotubes 438 or the graphene may reduce a decrease in electrical conductivity when the battery 300 is bent. The carbon nanotubes 428 and/or the graphene may be used as the conductive material 424. According to an embodiment, a weight proportion of the carbon nanotubes 438 disposed in the second mixture 430 may be greater than a weight proportion of the carbon nanotubes 428 disposed in the first mixture 420.

According to an embodiment, the flexibility of the second mixture 430 may be greater than the flexibility of the first mixture 420. For example, a weight ratio of the second binder 436 to the second mixture 430 may be greater than a weight ratio of the first binder 426 to the first mixture 420. According to an embodiment, the weight of the first binder 426 may be 1 to 3 wt% of the first mixture 420, and the weight of the second binder 436 may be 5 to 30 wt% of the second mixture 430.

According to an embodiment, first mixtures 420 and second mixtures 430 may be alternatingly arranged on the substrate 410. For example, a plurality of first mixtures 420 may be coated or applied onto a plurality of areas of the first surface 410a and the second surface 410b of the substrate 410, and a plurality of second mixtures 430 may be coated or applied onto a plurality of areas of the first surface 410a and second surface 410b of the substrate 410. Each first mixture 420 may be positioned between a plurality of second mixtures 430, and each second mixture 430 may be positioned between a plurality of first mixtures 420.

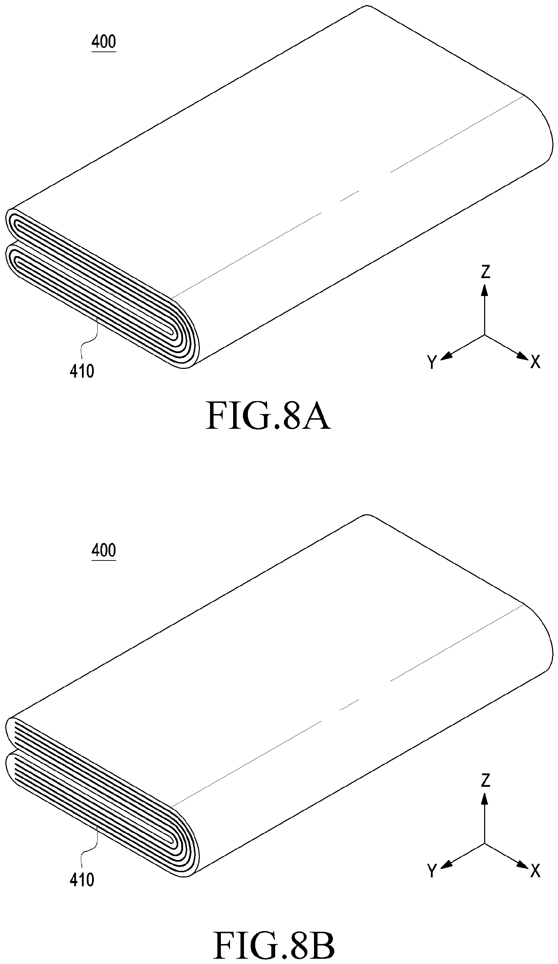

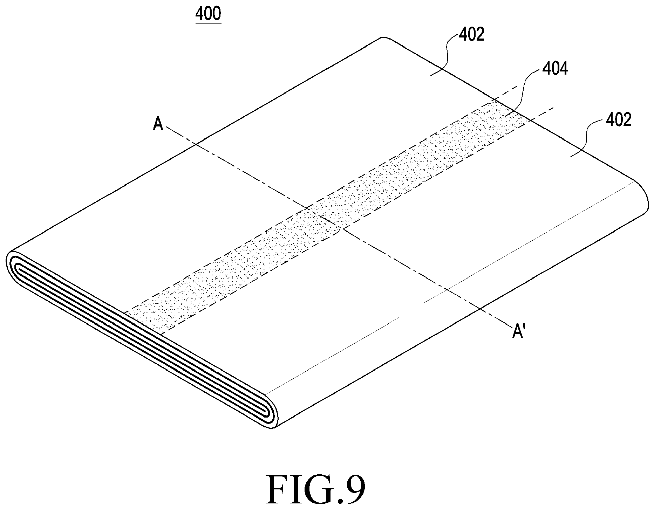

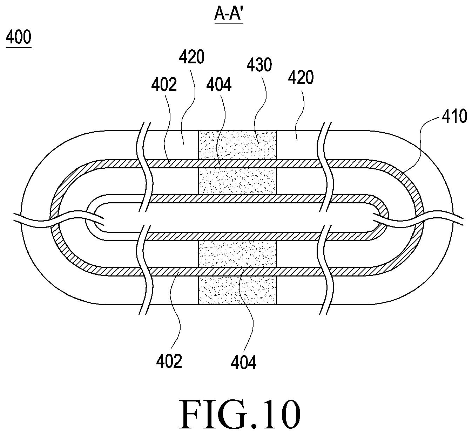

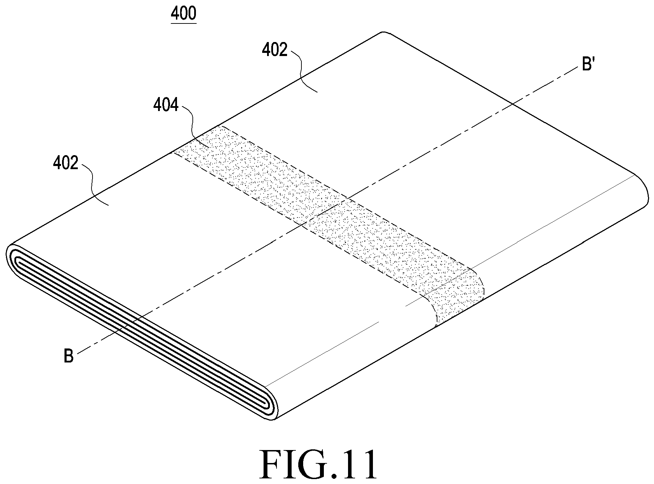

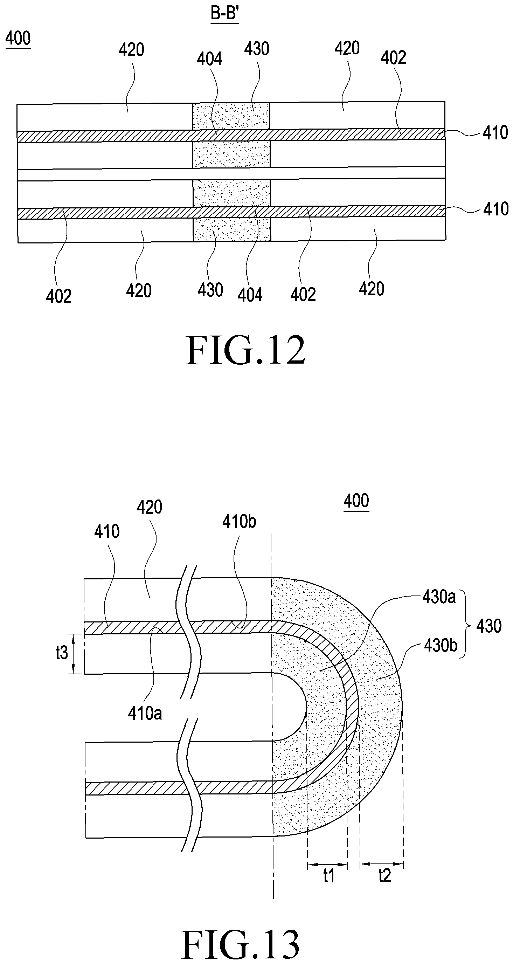

FIGs. 8A and 8B are perspective views illustrating a folded battery according to an embodiment of the disclosure. FIG. 9 is a perspective view illustrating a battery in a jelly roll structure according to an embodiment of the disclosure. FIG. 10 is a cross-sectional view taken along line A-A' of FIG. 9. FIG. 11 is a perspective view illustrating a battery in a jelly roll structure according to another embodiment of the disclosure. FIG. 12 is a cross-sectional view taken along line B-B' of FIG. 11.

Referring to FIGs. 8A to 12, at least a portion of the battery 400 may be folded. The configurations of the battery 400, the first mixture 420, and the second mixture 430 of FIGs. 8A to 12 may be identical in whole or part to the battery 400, the first mixture 420, and the second mixture 430 of FIG. 6.

According to certain embodiments, the battery 400 may be a jelly roll battery. For example, the substrate 410, the first mixture 420, and the second mixture 430 may have a roll shape in which at least a portion is wound. According to an embodiment (e.g., FIG. 8B), the battery 400 may be a stack-type battery. For example, when the battery 400 is a stack-type battery, the battery 400 may include a plurality of stacked electrode assemblies (e.g., the electrode assemblies 320 and 330 of FIG. 5). The substrate 410, the first mixture 420, and the second mixture 430 may be stacked.

According to certain embodiments, the battery 400 may include at least one first area 402, where the first mixture 420 is positioned, and at least one second area 404, where the second mixture 430 is positioned. According to an embodiment, when the battery 400 is viewed from above (e.g., in the Z-axis direction), the first mixture 420 may overlap in the first area 402, and the second mixture 430 may overlap in the second area 404. According to an embodiment, the flexibility of the second mixture 430 may be greater than the flexibility of the first mixture 420. The battery 400 may be bent or folded on the second area 404. According to an embodiment, the first area 402 and the second area 404 may be arranged to be stacked over each other. For example, the battery 400 may include at least two second areas 404 that may be folded. According to an embodiment, the first area 402 may be defined as a flat area, and the second area 404 may be defined as a bending area.

According to certain embodiments, the battery 400 may be folded in various directions. According to an embodiment (e.g., FIGs. 9 and 10), the second mixture 430 may be disposed along the length direction (e.g., the Y-axis direction) of the battery 400, and that the battery 400 may be folded on the length direction (Y-axis direction). According to another embodiment (e.g., FIGS. 11 and 12), the second mixture 430 may be disposed along the width direction (e.g., the X-axis direction) of the battery 400, and the battery 400 may be folded on the width direction (X-axis direction).

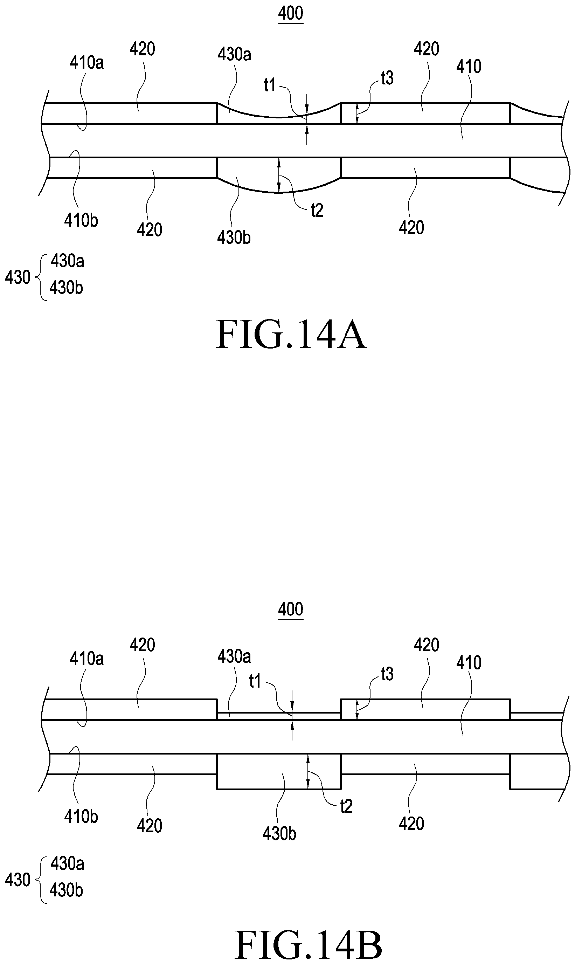

FIG. 13 is a view schematically illustrating a bent battery according to an embodiment of the disclosure. FIGs. 14A and 14B are views schematically illustrating a first mixture and a second mixture disposed on a substrate according to an embodiment of the disclosure.

Referring to FIGs. 13, 14A, and 14B, the second mixture 430 may include a contraction part 430a and an elongation part 430b. The contraction part 430a and the elongation part 430b may be located in different directions with respect to the substrate 410. For example, the contraction part 430a may be disposed on the first surface 410a of the substrate 410, and the elongation part 430b may be disposed on the second surface 410b of the substrate 410. The configurations of the battery 400, the substrate 410, the first mixture 420, and the second mixture 430 of FIGs. 13 and 14 may be identical in whole or part to the battery 400, the substrate 410, the first mixture 420, and the second mixture 430 of FIG. 6.

According tocertain embodiments , the battery 400 may be bent on the second area (e.g., the second area 404 of FIG. 9) where the second mixture 430 is positioned. When the battery 400 is folded, a portion of the substrate 410 may be considered to be a neutral plane, a portion (e.g., contraction part 430a) of the second mixture 430 may be contracted, and another portion (e.g., the elongation part 430b) thereof may be elongated, and the thickness of the electrode assembly (e.g., the electrode assembly 320 of FIG. 5) may be changed. When the thickness of the contraction part 430a and the thickness of the elongation part 430b are substantially the same, if the thickness of the electrode assembly is changed when the battery 400 is folded, the cathode and/or the anode may be lifted so that the performance of the battery 400 may be reduced.

According to certain embodiments, the second thickness t2 of the elongation part 430b may be larger than the first thickness t1 of the contraction part. According to an embodiment, the first thickness t1 of the contraction part 430a of the second mixture 430 may be 50% to 100% of the third thickness t3 of the first mixture 420. According to an embodiment, the second thickness t2 of the elongation part 430b of the second mixture 430 may be 100% to 150% of the third thickness t3 of the first mixture 420. The third thickness t3 may be the thickness of the first mixture 420 disposed on the first surface 410a or the second surface 410b of the substrate 410. According to an embodiment, the thicknesses of the first mixture 420 and the second mixture 430 may be determined based on the flexibility required for the battery 400 and the curvature and direction of the battery 400. According to an embodiment (e.g., FIG. 13), when the battery 400 is folded, the first thickness t1 of the contraction part 430a disposed on the first surface 410a of the substrate 410 and the second thickness t2 of the elongation part 430b disposed on the second surface 410b of the substrate 410 may be substantially the same.

According to certain embodiments, the sum of the thicknesses of the battery 400 may be substantially uniform. According to an embodiment, the sum of the first thickness t1 of the contraction part 430a and the second thickness t2 of the elongation part 430b may be 200% of the third thickness t3 of the first mixture 420. For example, the first thickness t1 may be 80% of the third thickness t3, and the second thickness t2 may be 120% of the third thickness t3.

According to certain embodiments, the contraction part 430a and the elongation part 430b may be formed with a continuously varying thickness. For example, the first thickness t1 of the contraction part 430a and the second thickness t2 of the elongation part 430b may gradually increase or decrease. According to another embodiment (e.g., FIG. 14B), the contraction part 430a and the elongation part 430b each may be formed to have a substantially uniform thickness. For example, the first thickness t1 of the contraction part 430a may be a predetermined value within a range from 50% to 100% of the third thickness t3 of the first mixture 420, and the second thickness t2 of the elongation part 430b may be a predetermined value within a range from 100% to 150% of the third thickness t3 of the first mixture 420.

According to an embodiment of the disclosure, an electronic device (e.g., the electronic device 200 of FIG. 2) may include a display (e.g., the display 220 of FIG. 2) and a battery (e.g., the battery 400 of FIG. 6) for supplying power to the display. The battery may include a substrate (e.g., the substrate 410 of FIG. 6) having a first surface (e.g., the first surface 410a of FIG. 6) and a second surface (e.g., the second surface 410b of FIG. 6) opposite to the first surface, a first mixture (e.g., the first mixture 420 of FIG. 6) disposed on the first surface and the second surface of the substrate, the first mixture including an electrode active material (e.g., the electrode active material 422 of FIG. 6), a conductive material (e.g., the conductive material 424 of FIG. 6), and a first binder (e.g., the first binder 426 of FIG. 6), and a second mixture (e.g., the second mixture 430 of FIG. 6) disposed on the first surface and the second surface of the substrate, the second mixture including the electrode active material, the conductive material, and a second binder (e.g., the second binder 436 of FIG. 6) more flexible than the first binder. The first mixture and the second mixture may be alternatingly arranged.

According to an embodiment, the electronic device may further include a coupling member (e.g., the coupling members 250 and 260 of FIG. 2) configured to be detachably coupled to a user's body part. The battery may be disposed in the coupling member.

According to an embodiment, the first binder may include polyvinylidene fluoride (PVDF), and the second binder may include polydimethylsiloxane (PDMS).

According to an embodiment, a weight ratio of the first binder may be 1 wt% to 3 wt% of the first mixture, and a weight ratio of the second binder may be 5 wt% to 30 wt% of the second mixture.

According to an embodiment, the second mixture may include a contraction part (e.g., the contraction part 430a of FIG. 13) disposed on the first surface and an elongation part (e.g., the elongation part 430b of FIG. 13) disposed on the second surface. A second thickness (e.g., the second thickness t2 of FIG. 14A) of the elongation part may be 100% to 150% of a third thickness (e.g., the third thickness t3 of FIG. 14A) of the first mixture, and a first thickness (e.g., the first thickness t1 of FIG. 14A) of the contraction part may be 50% to 100% of the third thickness.

According to an embodiment, the electronic device may further include an electrode assembly (e.g., the electrode assembly 320 of FIG. 5) including a cathode (e.g., the cathodes 322 and 332 of FIG. 5), an anode (e.g., the anodes 324 and 334 of FIG. 5), and a separator (e.g., the separator 326 of FIG. 5) disposed between the cathode and the anode. The substrate may include a cathode substrate (e.g., the cathode substrate 322a and 332a of FIG. 5) forming at least a portion of the cathode and an anode substrate (e.g., the anode substrate 324a and 334a of FIG. 5) forming at least a portion of the anode. The first mixture may include a 1-1th mixture (e.g., the 1-1th mixture 322b of FIG. 5) disposed on the cathode substrate and a 1-2th mixture (e.g., the 1-2th mixture 324b of FIG. 5) disposed on the anode substrate. The second mixture may include a 2-1th mixture (e.g., the 2-1th mixture 332b of FIG. 5) disposed on the cathode substrate and a 2-2th mixture (e.g., the 2-2th mixture 334b of FIG. 5) disposed on the anode substrate.

According to an embodiment, the electrode assembly may have a wound roll shape or a stacked shape. The battery may include a first area (e.g., a first area 402 of FIG. 9), in which the first mixture is position, and a second area (e.g., the second area 404 of FIG. 9), in which the second mixture is positioned. The electronic device may be configured to be folded on the second area. According to an embodiment of the disclosure, a battery (e.g., the battery 400 of FIG. 6) may include a substrate (e.g., the substrate 410 of FIG. 6) having a first surface (e.g., the first surface 410a of FIG. 6) and a second surface (e.g., the second surface 410b of FIG. 6) opposite to the first surface, a first mixture (e.g., the first mixture 420 of FIG. 6) disposed on the first surface and the second surface of the substrate, the first mixture including an electrode active material (e.g., the electrode active material 422 of FIG. 6), a conductive material (e.g., the conductive material 424 of FIG. 6), and a first binder (e.g., the first binder 426 of FIG. 6), and a second mixture (e.g., the second mixture 430 of FIG. 6) disposed on the first surface and the second surface of the substrate, the second mixture including the electrode active material (e.g., the electrode active material 432 of FIG. 6), the conductive material (e.g., the conductive material 434 of FIG. 6), and a second binder (e.g., the second binder 436 of FIG. 6) more flexible than the first binder. The first mixture and the second mixture may be alternatingly arranged.

According to an embodiment, the first binder may include at least one of polyvinylidene fluoride (PVDF) or styrene butadiene rubber (SBR), and the second binder includes at least one of polydimethylsiloxane (PDMS), poly(4-4, ethylene dioxythiophene):poly(styrenesulfonate) (PEDOT:PSS), polyaniline (PANI), polypyrrole (Ppy), or polyethylenimine (PEI).

According to an embodiment, a weight ratio of the first binder may be 1 wt% to 3 wt% of the first mixture, and a weight ratio of the second binder may be 5 wt% to 30 wt% of the second mixture.

According to an embodiment, the second mixture may include a contraction part (e.g., the contraction part 430a of FIG. 13) disposed on the first surface and an elongation part (e.g., the elongation part 430b of FIG. 13) disposed on the second surface. A second thickness (e.g., the second thickness t2 of FIG. 14A) of the elongation part may be larger than a first thickness (e.g., the first thickness t1 of FIG. 14A) of the contraction part.

According to an embodiment, the second thickness of the elongation part may be 100% to 150% of a third thickness (e.g., the third thickness t3 of FIG. 14A) of the first mixture, and the first thickness of the contraction part may be 50% to 100% of the third thickness.

According to an embodiment, the sum of the first thickness and the second thickness may be 200% of the third thickness.

According to an embodiment, the second mixture may include at least one of carbon nanotubes (e.g., carbon nanotubes 438 of FIG. 6) or graphene.

According to an embodiment, the battery may further comprise an electrode assembly (e.g., the electrode assembly 320 of FIG. 5) including a cathode (e.g., the cathodes 322 and 332 of FIG. 5), an anode (e.g., the anodes 324 and 334 of FIG. 5), and a separator (e.g., the separator 326 of FIG. 5) disposed between the cathode and the anode. The substrate may include a cathode substrate (e.g., the cathode substrate 322a and 334a of FIG. 5) forming at least a portion of the cathode and an anode substrate (e.g., the anode substrate 324a and 334a of FIG. 5) forming at least a portion of the anode. The first mixture may include a 1-1th mixture (e.g., the 1-1th mixture 322b of FIG. 5) disposed on the cathode substrate and a 1-2th mixture (e.g., the 1-2th mixture 324b of FIG. 5) disposed on the anode substrate. The second mixture may include a 2-1th mixture (e.g., the 2-1th mixture 332b of FIG. 5) disposed on the cathode substrate and a 2-2th mixture (e.g., the 2-2th mixture 334b of FIG. 5) disposed on the anode substrate.

According to an embodiment, the cathode substrate may include aluminum, and the 1-1th mixture and the 2-1th mixture may include lithium oxide.

According to an embodiment, the anode substrate may include copper, and the 1-2th mixture and the 2-2th mixture may include graphite.

According to an embodiment, the electrode assembly may have a wound roll shape.

According to an embodiment, the battery may include a first area (e.g., a first area 402 of FIG. 9), in which the first mixture is position, and a second area (e.g., the second area 404 of FIG. 9), in which the second mixture is positioned. The battery may be configured to be folded on the second area.

According to an embodiment, the second binder 436 may include a self-healing polymer.

It is apparent to one of ordinary skill in the art that various batteries and electronic devices including a battery according to various embodiments of the disclosure as described above are not limited to the above-described embodiments and those shown in the drawings, and various changes, modifications, or alterations may be made thereto without departing from the scope of the disclosure.

While the present disclosure has been shown and described with reference to various embodiments thereof, it will be understood by those skilled in the art that various changes in form and details may be made therein without departing from the present disclosure as defined by the appended claims and their equivalents.

## Claims

1. An electronic device, comprising:
a display; and
a battery for supplying power to the display, wherein the battery includes:
a substrate having a first surface and a second surface opposite to the first surface;
a first mixture disposed on the first surface and the second surface of the substrate, the first mixture including an electrode active material, a conductive material, and a first binder; and
a second mixture disposed on the first surface and the second surface of the substrate, the second mixture including the electrode active material, the conductive material, and a second binder more flexible than the first binder, and wherein the first mixture and the second mixture are alternatingly arranged.

2. The electronic device of claim 1, wherein the first binder includes polyvinylidene fluoride (PVDF) and/or styrene butadiene rubber (SBR), and the second binder includes polydimethylsiloxane (PDMS), poly(4-4, ethylene dioxythiophene):poly(styrenesulfonate) (PEDOT:PSS), polyaniline (PANI), polypyrrole (Ppy), and/or polyethylenimine (PEI).

3. The electronic device of claim 1, wherein a weight ratio of the first binder is 1 wt% to 3 wt% of the first mixture, and a weight ratio of the second binder is 5 wt% to 30 wt% of the second mixture.

4. The electronic device of claim 1, wherein the second mixture includes a contraction part disposed on the first surface and an elongation part disposed on the second surface, and wherein a second thickness of the elongation part is larger than a first thickness of the contraction part.

5. The electronic device of claim 4, wherein the second thickness of the elongation part is 100% to 150% of a third thickness of the first mixture, and the first thickness of the contraction part is 50% to 100% of the third thickness.

6. The electronic device of claim 5, wherein a sum of the first thickness and the second thickness is 200% of the third thickness.

7. The electronic device of claim 1, wherein the second mixture includes carbon nanotubes and/or graphene.

8. The electronic device of claim 1, further comprising an electrode assembly including a cathode, an anode, and a separator disposed between the cathode and the anode,
wherein the substrate includes a cathode substrate forming at least a portion of the cathode and an anode substrate forming at least a portion of the anode,
wherein the first mixture includes a 1-1th mixture disposed on the cathode substrate and a 1-2th mixture disposed on the anode substrate, and
wherein the second mixture includes a 2-1th mixture disposed on the cathode substrate and a 2-2th mixture disposed on the anode substrate.

9. The electronic device of claim 8, wherein the cathode substrate includes aluminum, and the 1-1th mixture and the 2-1th mixture include lithium oxide.

10. The electronic device of claim 8, wherein the anode substrate includes copper, and the 1-2th mixture and the 2-2th mixture include graphite.

11. The electronic device of claim 8, wherein the electrode assembly has a wound roll shape or a stack shape.

12. The electronic device of claim 11, wherein the battery includes a first area, in which the first mixture is positioned, and a second area, in which the second mixture is positioned, and wherein the battery is folded on the second area.

13. The electronic device of claim 1, wherein the second binder includes a self-healing polymer.

14. The electronic device of claim 1, further comprising a coupling member configured to be detachably coupled to a user's body part, wherein the battery is disposed in the coupling member.

15. A battery, comprising:
a substrate having a first surface and a second surface opposite to the first surface;
a first mixture disposed on the first surface and the second surface of the substrate, the first mixture including an electrode active material, a conductive material, and a first binder; and
a second mixture disposed on the first surface and the second surface of the substrate, the second mixture including the electrode active material, the conductive material, and a second binder more flexible than the first binder, and wherein the first mixture and the second mixture are alternatingly arranged.
